# EUROPÄISCHE PATENTSCHRIFT

(11) **EP 1 412 625 B1**
(45) Veröffentlichungstag und Bekanntmachung des Hinweises auf die Patenterteilung: **24.11.2004**
(21) Anmeldenummer: 02791428.2
(22) Anmeldetag: 01.08.2002
(51) Int. Cl.: F02B 31/00

(54) **ZYLINDERKOPF FÜR EINE BRENNKRAFTMASCHINE**
CYLINDER HEAD FOR AN INTERNAL COMBUSTION ENGINE
CULASSE DE CYLINDRE POUR UN MOTEUR A COMBUSTION INTERNE

(30) Priorität: 02.08.2001 AT 6092001
(43) Veröffentlichungstag der Anmeldung: 28.04.2004
(73) Patentinhaber: AVL List GmbH, 8020 Graz (AT)
(72) Erfinder: LAIMBÖCK, Franz, A-8051 Thal (AT)
(74) Vertreter: Babeluk, Michael, Dipl.-Ing.
(86) Internationale Anmeldenummer: PCT/AT2002/000232
(87) Internationale Veröffentlichungsnummer: WO 2003/012267

(56) Entgegenhaltungen:
- EP-A- 1 087 115
- FR-A- 1 477 125
- US-A- 3 368 259

## Beschreibung

Die Erfindung betrifft einen Zylinderkopf für eine Brennkraftmaschine mit zumindest einem eine Walzenströmung im Brennraum erzeugenden, vorzugsweise im Sinne der Walzenströmung gekrümmten, Einlasskanal mit einem hinsichtlich der Walzenströmung äußeren Wandbereich und einem inneren Wandbereich, wobei im Bereich der Mündung des Einlasskanals in den Brennraum ein Ventilsitzring angeordnet ist.

Zylinderköpfe mit einer Walzenströmung erzeugenden Einlasskanälen sind aus der US 5,640,941 A, US 5,165,374 A, der US 5,359,972 A oder der GB 2 165 886 A bekannt. Durch die Walzenströmung (Tumbie-Strömung) kann insbesondere im Teillastbereich der Verbrennungsablauf und damit der Kraftstoffverbrauch und die Emissionsbildung günstig beeinflusst werden, wobei eine möglichst hohe Walzenströmung angestrebt wird.

Die Größe der Watzenströmung wird dabei maßgebend von der Lage des Schnittpunktes der Kanalmittellinie des Einlasskanals mit der Mittellinie des Ventilsitzringes bestimmt. Je näher der Schnittpunkt beim Brennraum liegt, desto stärker ist die Walzenströmung. Durch eine starke Neigung des Einlasskanals zur Mittellinie des Ventilsitzringes kann eine starke Walzenbewegung im Brennraum erzeugt werden. Eine starke Neigung der Strömungsmittellinie des Einlasskanals bezüglich der Achse des Ventilsitzringes hat allerdings den Nachteil, dass der Strömungsquerschnitt des Einlasskanals stark vermindert wird, was sich insbesondere im Volllastbereich durch einen erheblich reduzierten Durchfluss nachteilig bemerkbar macht. Bei der Konzeption des Einlasskanals muss somit ein Kompromiss zwischen hoher Walzenströmung im Teillastbereich und hohem Durchfluss im Volllastbereich gefunden werden.

Aus der DE 1 295 274 B1 ist ein Ladungswechselkanal eines Zylinderkopfes einer Brennkraftmaschine bekannt, in dessen Mündungsbereich ein Ventilsitzring eingesetzt ist, der die Innenkrümmung der Kanalwandung an der Stelle des Kemstoßes bildet. In einer Ausführungsvariante ist ein Wandbereich des Ladungswechselkanals im Bereich des Ventilsitzringes durch einen Fortsatz des Zylinderkopfes innerhalb des Ventilsitzringes gebildet. Der Ventilsitzring ist dabei an zumindest drei Seiten direkt vom Zylinderkopfmaterial umgeben. Dadurch kommt es zu Mehrfachpressungen und hohen mechanischen Spannungen in diesem Bereich.

Aufgabe der Erfindung ist es, einen Zylinderkopf der eingangs genannten Art derart weiterzubilden, dass eine starke Tumble-Strömung ohne wesentliche Verminderung des Strömungsquerschnittes des Einlasskanals erzeugt werden kann, wobei Spannungsspitzen im Zylinderkopf vermieden werden sollen.

Erfindungsgemäß erfolgt dies dadurch, dass der äußere Wandbereich im Bereich des Ventilsitzringes zumindest teilweise durch einen Fortsatz des Zylinderkopfes innerhalb einer inneren Mantelfläche des Ventilsitzringes gebildet ist, wobei die innere Mantelfläche des Ventilsitzringes gegenüber dem Fortsatz freigestellt ist. Durch die Freistellung können Mehrfachpressungen im Bereich des Ventilsitzringes wirksam vermieden werden. Vorzugsweise ist dabei vorgesehen, dass eine fiktive Verlängerung der Kanalwand des Einlasskanals im Bereich des Fortsatzes den Ventilsitzring im Bereich der inneren Mantelfläche schneidet, wobei die Schnittlinie vorzugsweise - in Richtung der Achse des Ventilsitzringes betrachtet - zumindest teilweise in einer ventilsitzseitigen Hälfte der inneren Mantelfläche liegt.

Durch diese Maßnahme wird erreicht, dass der Schnittpunkt zwischen der Kanalmittellinie des Einlasskanals und der Mittellinie des Ventilsitzringes einen sehr geringen Abstand zum Brennraum aufweist, wodurch eine sehr starke Walzenströmung im Brennraum bereits bei einer geringen Neigung der Kanalmittellinie des Einlasskanals zur Mittellinie des Ventilsitzringes erzeugt wird. Dadurch bleibt ein höchstmöglicher Durchsatz im Volllastbereich erhalten.

In Weiterführung der Erfindung ist vorgesehen, dass der Ventilsitzring stromaufwärts seines engsten Durchflussquerschnittes im Übergangsbereich zum Einlasskanal eine scharfkantige Anfasung aufweist. Dadurch lässt sich eine hohe Walzenbewegung erzielen. Alternativ dazu kann vorgesehen sein, dass der Ventilsitzring stromaufwärts seines engsten Durchflussquerschnittes im Übergangsbereich zum Einlasskanal einen zum Einlasskanal stetig anschließenden Übergangsradius aufweist. Dies ermöglicht es, den Strömungsquerschnitt des Einlasskanals im Bereich der Mündung größtmöglich zu konzipieren und Strömungsablösungen weitgehend zu vermeiden.

Der erfindungsgemäße Zylinderkopf kann in besonders vorteilhafter Weise durch eine, eine Gussschräge aufweisende Stahlkokille entformt werden, was eine sehr einfache Herstellung ermöglicht.

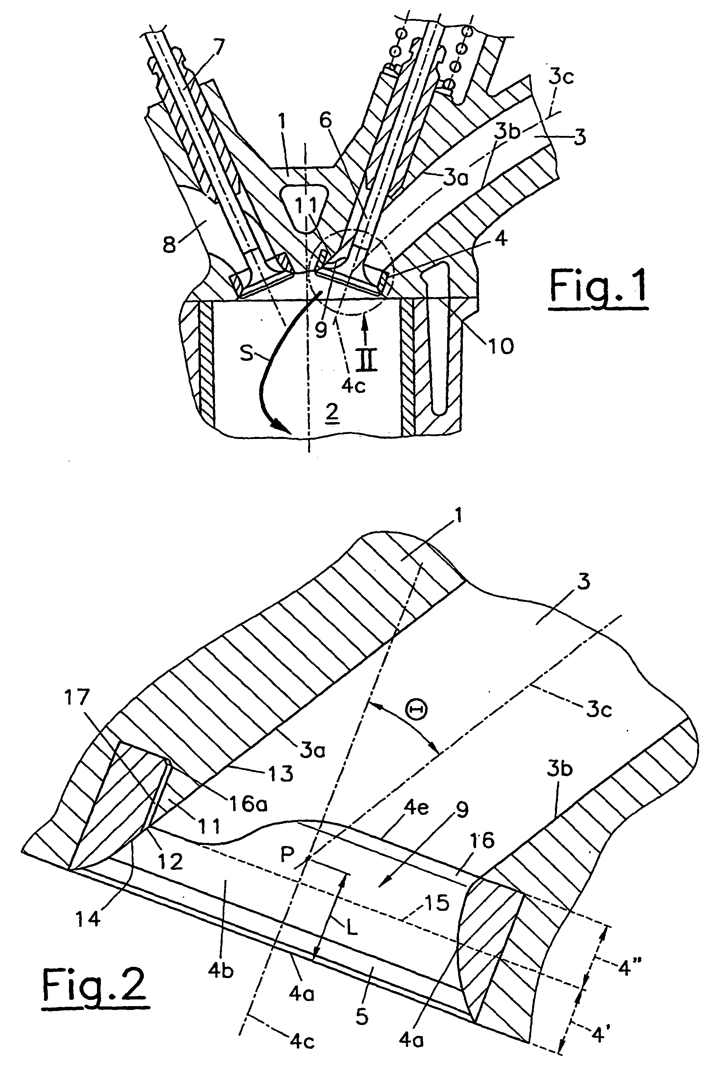

Die Erfindung wird im Folgenden anhand der Figuren näher erläutert. Es zeigen
- Fig. 1: einen erfindungsgemäßen Zylinderkopf in einem Querschnitt und
- Fig. 2: das Detail II aus Fig. 1.

Der Zylinderkopf 1 weist zumindest einen eine Walzenströmung (Tumbie-Strömung) S im Brennraum 2 erzeugenden Einlasskanal 3 auf. Im Bereich der Mündung 9 des Einlasskanals 3 in den Brennraum 2 ist im Zylinderkopf 1 ein Ventilsitzring 4 angeordnet. Der Ventilsitzring 4 bildet den Ventilsitz 5 für das Einlassventil 6 aus. Mit Bezugszeichen 7 ist ein Auslassventil zur Steuerung eines Auslasskanals 8 bezeichnet. Der hinsichtlich der Walzenströmung S äußere Wandbereich des Einlasskanals 3 ist mit Bezugszeichen 3a, der innere Wandbereich mit Bezugszeichen 3b bezeichnet. Der äußere Wandbereich 3a ist - in einem Normalschnitt zur Kanalmittellinie 3c betrachtet - von der Zylinderkopfebene 10 weiter beabstandet als der innere Wandbereich 3b.

Um eine möglichst starke Walzenströmung S im Brennraum 2 zu erzeugen, weist der Zylinderkopf 1 im Bereich der Mündung 9 des Einlasskanals 3 in den Brennraum 2 einen Fortsatz 11 auf, welcher sich in den von der inneren Mantelfläche 4a aufgespannten Hohlraum 4b erstreckt. Der innerhalb der inneren Mantelfläche 4a liegende Fortsatz 11 ist als Verlängerung des äußeren Wandbereiches 3a ausgebildet.

Die fiktive Verlängerung 12 der Kanalwand 13 im Bereich des Fortsatzes (11) schneidet den Ventilsitzring 4 im Bereich der inneren Mantelfläche 4a, wobei die Schnittlinie 14 zumindest teilweise in der ventilsitzseitigen Hälfte 4' des Ventilsitzringes 4 liegt. Die dem Ventilsitz 5 abgewandte Hälfte des Ventilsitzringes 4 ist mit 4" bezeichnet. Der Fortsatz 11 selbst erstreckt sich zumindest teilweise bis etwa zu einer Mittelebene 15 des Ventilsitzringes 4.

Der Fortsatz 11 bewirkt eine Verlagerung der Kanalmittellinie 3c des Einlasskanals 3 in Richtung der Zylinderkopfebene 10, wodurch der Schnittpunkt P zwisehen der Kanalmittellinie 3c und der Mittellinie 4c des Ventilsitzringes 4 sich zum Brennraum 2 hin verschiebt und der Abstand L zwischen dem Schnittpunkt P und der brennraumseitigen Stirnfläche 4d des Ventilsitzringes 4 kleiner wird.

Ohne Fortsatz 11 könnte eine entsprechende, die Walzenströmung S verstärkende Verkürzung des Abstandes L zwischen dem Schnittpunkt P und der brennraumseitigen Stirnfläche 4d nur durch einen relativ großen Neigungswinkel Θ zwischen der Kanalmittellinie 3c und der Mittellinie 4c des Ventilsitzringes 4 erreicht werden, was allerdings den Nachteil einer erheblichen Querschnittsverminderung des Einlasskanals 3 mit sich bringen würde. Der Fortsatz 11 gestattet eine starke Walzenbewegung S bei relativ geringem Neigungswinkel Θ, wodurch ein hoher Durchfluss im Volllastbereich erzielbar ist.

Als weitere Maßnahme zur Erzeugung eines möglichst großen Durchflussquerschnittes des Einlasskanals 3 weist der Ventilsitzring 4 im Bereich des Überganges zwischen der inneren Mantelfläche 4a und der zylinderkopfseitigen Stirnfläche 4e einen Übergangsradius 16 entsprechend der Neigung des inneren Wandbereiches 3b auf. Anstelle des Übergangsradius 16 kann auch eine scharfkantige Anfasung 16a vorgesehen sein, wodurch die Walzenbewegung S erhöht werden kann. In Fig. 2 ist zur Veranschaulichung der Ventilsitzring 4 in seiner linken Hälfte mit einer Anfasung 16a und in seiner rechten Hälfte mit einem Übergangsradius 16 dargestellt. In der Praxis wird der Ventilsitzring 4 allerdings entweder mit einem umlaufenden Übergangsradius 16 oder mit einer umlaufenden Anfasung 16a ausgeführt.

Um eine Doppelpressung des Ventilsitzringes 4 zu vermeiden, ist der Ventilsitzring 4 gegenüber dem Fortsatz 11 freigestellt. Die Freistellung ist mit Bezugszeichen 17 bezeichnet.

Der einstückig mit dem Zylinderkopf 1 ausgebildete Fortsatz 11 lässt sich in einem Druckgussvorgang mit dem Einlasskanal 3 herstellen.

## Patentansprüche

1. Zylinderkopf (1) für eine Brennkraftmaschine mit zumindest einem eine Walzenströmung (S) im Brennraum (2) erzeugenden, vorzugsweise im Sinne der Walzenströmung (S) gekrümmten, Einlasskanal (3) mit einem hinsichtlich der Walzenströmung (S) äußeren Wandbereich (3a) und einem inneren Waridbereich (3b), wobei im Bereich der Mündung (9) des Einlasskanals (3) in den Brennraum (2) ein Ventitsltzring (4) angeordnet ist, und wobei der äußere Wandbereich (3a) im Bereich des Ventilsitzringes (4) zumindest teilweise durch einen Fortsatz (11) des Zylinderkopfes (1) innerhalb einer inneren Mantelfläche (4a) des Ventitsitzringes (4) gebildet ist, **dadurch gekennzeichnet, dass** die innere Mantelfläche (4a) des Ventilsitzringes (4) gegenüber dem Fortsatz (11) radial freigestellt ist.

2. Zylinderkopf (1) nach Anspruch 1, **dadurch gekennzeichnet, dass** eine fiktive Verlängerung (12) der Kanalwand (13) des Einlasskanals (3) im Bereich des Fortsatzes (11) den Ventilsitzring (4) im Bereich der inneren Mantelfläche (4a) schneidet, wobei die Schnittlinie (14) vorzugsweise - in Richtung der Achse (4c) des Ventilsitzringes (4) betrachtet - zumindest teilweise in einer ventilsitzseitigen Hälfte (4') der inneren Mantelfläche (4a) liegt.

3. Zylinderkopf (1) nach Anspruch 1 oder 2, **dadurch gekennzeichnet, dass** der Einlasskanal (3) durch eine Stahlkokille mit Gussschräge entformbar ist.

4. Zylinderkopf (1) nach einem der Ansprüche 1 bis 3, **dadurch gekennzeichnet, dass** der Ventilsitzring (4) stromaufwärts seines engsten Durchflussquerschnittes im Übergangsbereich zum Einlasskanal (3) einen zum Einlasskanal (3) stetig anschließenden Übergangsradius (16) aufweist.

5. Zylinderkopf (1) nach einem der Ansprüche 1 bis 3, **dadurch gekennzeichnet, dass** der Ventilsitzring (4) stromaufwärts seines engsten Durchflussquerschnittes im Übergangsbereich zum Einlasskanal eine scharfkantige Anfasung (16a) aufweist.

## Claims

1. A cylinder head (1) for an internal combustion engine with at least one intake port (3) which generates a tumble flow (S) in the combustion chamber (2), which channel is curved preferably in the direction of the tumble flow (S) and comprises a wall region (3a) which is external relative to the tumble flow (S) and an inner wall region (3b), with a valve seat ring (4) being arranged in the region of the opening (9) of the intake port (3) into the combustion chamber (2) and with the outer wall region (3a) in the area of the valve seat ring (4) being formed at least partly by an extension (11) of the cylinder head (1) within an inner jacket surface (4a) of the valve seat ring (4), **characterized in that** the inner jacket surface (4a) of the valve seat ring (4) is radially exposed relative to the extension (11).

2. A cylinder head (1) as claimed in claim 1, **characterized in that** a fictitious extension (12) of the port wall (13) of the intake port (3) in the region of the extension (11) intersects the valve seat ring (4) in the region of the inner jacket surface (4a), with the line of intersection (14), when seen in the direction of the axis (4c) of the valve seat ring (4), preferably lying at least partly in a half (4') of the inner jacket surface (4a) on the valve seat side.

3. A cylinder head (1) as claimed in claim 1 or 2, **characterized in that** the intake port (3) can be removed from a steel ingot mold having a casting incline.

4. A cylinder head (1) as claimed in one of the claims 1 to 3, **characterized in that** the valve seat ring (4) is provided with a transitional radius (16) continuously adjacent to the intake port (3) upstream of its narrowest flow cross section in the transitional region to the intake port (3).

5. A cylinder head (1) as claimed in one of the claims 1 to 3, **characterized in that** the valve seat ring (4) is provided with a sharp-edged chamfering (16a) upstream of its narrowest flow cross section in the transitional region to the intake port.

## Revendications

1. Culasse de cylindre (1) pour un moteur à combustion interne avec un écoulement en rouleaux (S) dans la chambre de combustion (2), un canal d'admission (3), de préférence cintré dans le sens de l'écoulement en rouleaux (S), et ayant une zone de paroi extérieure (3a) pour l'écoulement (S) et une zone de paroi intérieure (3b), avec un anneau formant siège de soupape (4) au niveau de l'embouchure (9) du canal d'admission (3) dans la chambre de combustion (2), alors que la zone de paroi extérieure (3a) est au niveau de l'anneau constituant le siège de soupape (4) formée au moins en partie par un prolongement (11) de la culasse (1) à l'intérieur d'une surface-enveloppe intérieure (4a) de l'anneau formant siège de soupape (4),
**caractérisée en ce que**
la surface-enveloppe intérieure (4a) de l'anneau (4) est dégagée radialement par rapport au prolongement (11).

2. Culasse de cylindre (1) selon la revendication 1,
**caractérisée en ce que**
la poursuite théorique (12) de la paroi (13) du canal d'admission (3) au niveau du prolongement (11) coupe l'anneau formant siège de soupape (4) au niveau de sa surface-enveloppe intérieure (4a),
la ligne de coupe (14) (vue de préférence en direction de l'axe (4c) de l'anneau formant siège de soupape (4)) se situe au moins partiellement dans une moitié (4') de la surface-enveloppe intérieure (4a) du côté du siège de soupape.

3. Culasse de cylindre (1) selon la revendication 1 ou 2,
**caractérisée en ce que**
le canal d'admission (3) se réalise avec une coquille en acier ayant une surface inclinée de fonderie.

4. Culasse de cylindre (1) selon l'une des revendications 1 à 3,
**caractérisée en ce que**
l'anneau formant siège de soupape (4) présente en amont de sa section de passage la plus étroite, dans la zone transitoire avec le canal d'admission (3), un rayon de transition (16) rejoignant de manière continue le canal d'admission (3).

5. Culasse de cylindre (1) selon l'une des revendications 1 à 3,
**caractérisée en ce que**
l'anneau formant siège de soupape (4) présente un congé (16a) avec arête vive en amont de sa section de passage la plus étroite, dans la zone de transition avec le canal d'admission.
